# EUROPEAN PATENT SPECIFICATION

(11) **EP 0 459 725 B1**
(45) Date of publication and mention of the grant of the patent: **04.02.1998**
(21) Application number: 91304742.9
(22) Date of filing: 24.05.1991
(51) Int. Cl.: G11B 5/48, G11B 5/704

(54) **Magnetic disk apparatus**
Aufzeichnungsgerät für Magnetplatten
Appareil d'enregistrement sur disques magnétiques

(30) Priority: 28.05.1990 JP 135506/90
(43) Date of publication of application: 04.12.1991
(73) Proprietor: International Business Machines Corporation, Armonk, N.Y. 10504 (US)
(72) Inventor: Matsui, Takao, Yamato-shi, Kanagawa-ken (JP); Sonobe, Yoshiaki, Fujisawa-shi, Kanagawa-ken (JP)
(74) Representative: Moss, Robert Douglas

(56) References cited:
- DE-A- 3 614 074
- US-A- 4 738 885
- US-A- 4 803 106
- US-A- 4 907 112
- US-A- 4 912 582
- US-A- 4 953 046

## Description

### Technical Field of the Invention

The invention relates to a magnetic disk apparatus including recording disks with glass or ceramic as the disk substrate.

### Background of the Invention

Heretofore, magnetic disk drives employing hard disks have commonly used aluminum as the disk substrate. But recently, in the desire to provide increased storage capacity and miniaturisation, glass (see for example US 4,803,106) and ceramic (e.g. US 4,738,885) substrates have been considered. Such disk substrates have excellent surface characteristics which permit a reduction in magnetic head flying height thereby making possible an increase in recording density.

The conventional aluminum disk substrate can shield the electromagnetic coupling of a pair of upper and lower magnetic heads located on opposite sides of the disk. However, a glass or ceramic substrate does not provide such a shielding function. This electromagnetic coupling causes an increase in crosstalk noise and a deterioration in the quality of the reproduced signal. As an illustration, when the lower head records a 4 MHz signal while the upper head reproduces it, measurements of the crosstalk (at the 4 MHz output level) for the glass substrate disk and the aluminum substrate disk, both 1.27 mm thick, show that the crosstalk of the glass substrate disk is +8.9 dB higher than that of the aluminum substrate disk. Also, when the attenuation ratio of the reproduced signal is defined as f'^{4M} / f^{4M}, and the ratio of crosstalk as f'^{1.5M} / f'^{4M}, and f^{4M}, f'^{4M}, and f'^{1.5M} for glass substrate disk are measured, the ratios are -1.73 dB and -46.4 dB, respectively. In contrast, measurements of f^{4M}, f'^{4M}, and f'^{1.5M} for the aluminum substrate disk reveal that the attenuation ratio of the reproduced signal and the ratio of crosstalk are -0.38 dB and -60.6 dB, respectively. It is clear from these measurements that the glass substrate disk, when compared with the aluminium substrate disk, has considerably greater ratios of attenuation and of crosstalk. (In the above discussion, f^{4M} = reproduced signal level by the top head at 4 MHz before recording by the bottom head, f'^{4M} = reproduced signal level at 4 MHz by the top head after recording by bottom head, and f'^{1.5M} = reproduced signal level at 1.5 MHz by the top head after recording by the bottom head.)

The magnetic characteristics of the recording layer of the magnetic disk being used in the experiment are:
H_{c} = 1 x 10³ Oe, Mt = 4.2 x 10⁻³ emu/cm² for the aluminium substrate disk, and H_{c} = 1.25 x 10³ Oe, Mt = 4.0 x 10⁻³ emu/cm² for the glass substrate disk where M is the remanent magnetisation and t is the thickness of the magnetic layer.

The magnetic head used in the measurements had a gap length of 0.6 µm, and the width of a data track, T_{w}, was equal to 10 µm. In addition, the flying height of the magnetic head was 8 µ.

### Disclosure of the Invention

The invention seeks to reduce the above mentioned electromagnetic crosstalk and attenuation in a conventional magnetic disk apparatus against which claim 1 is delimited. The invention accordingly provides a magnetic disk apparatus including at least one magnetic disk comprising a rigid substrate composed of an electrically non-conductive material and a magnetic recording layer on both surfaces of the substrate, the apparatus further including: a first magnetic head located adjacent to a first surface of the magnetic disk; and a second magnetic head located adjacent to a second surface of the magnetic disk; wherein the first magnetic head and the second magnetic head are disposed at locations shifted with respect to one another in a radial direction by a distance d which is less than the radial width of either of the first and second magnetic heads wherein d corresponds to an integral number of recording track widths.

In this way, the crosstalk and output signal attenuation are sharply reduced, not by the provision of a shield layer (which would be more costly), but by the shifting in relative position of the top and bottom magnetic heads.

Although top and bottom heads may be circumferentially shifted with respect to one another, i.e. shifted in the direction of motion of the rotating disk, it is preferred that the heads are shifted radially with respect to one another.

A preferred embodiment of the invention will now be described, by way of example only, with reference to the accompanying drawings.

### Brief Description of the Drawings

FIG. 1 is a schematic view of the positional relationship of the magnetic disk and the magnetic heads as used in one embodiment of the apparatus according to the present invention;
FIG. 2 is an overall view of a magnetic disk apparatus according to the present invention;
FIG. 3 shows the structure of a magnetic actuator suitable for use in the apparatus according to the present invention;
FIG. 4 is a table of values showing the attenuation of the output signal and the amount of crosstalk of the conventional technique and of the present invention.

### Detailed Description of the Invention

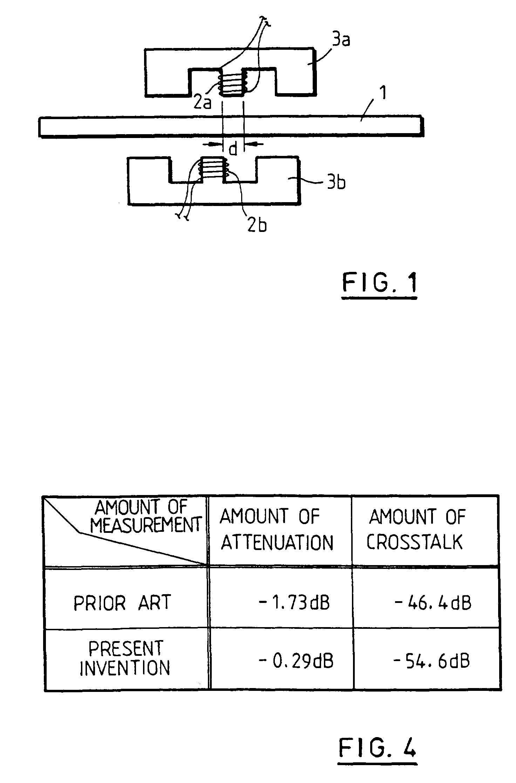

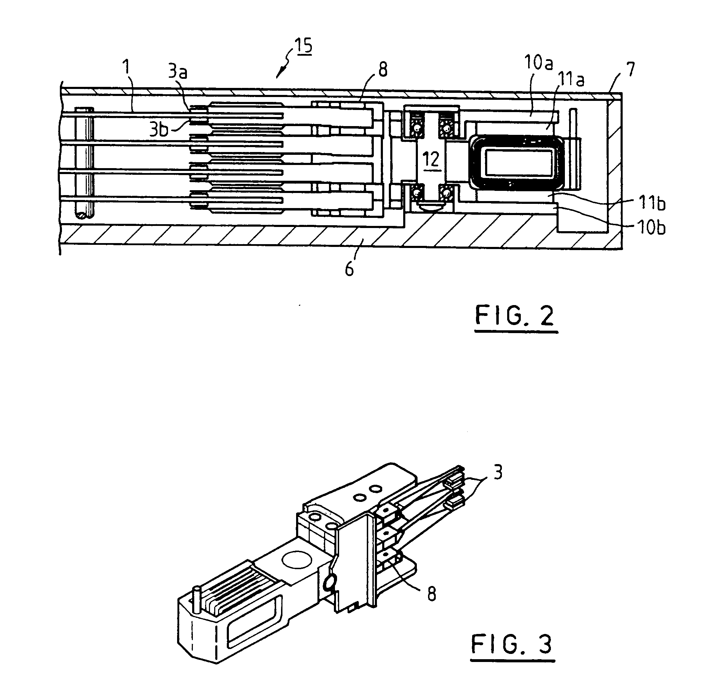

Before referring to the embodiment of FIG. 1, first refer to FIG. 2 and FIG. 3 to understand the overall structure of this magnetic disk apparatus. The magnetic disk apparatus 12 includes a base 6 and an upper cover 7. On the base 6, an actuator 8 is mounted by a shaft 12, and to the actuator 8, sliders 3a, 3b are mounted across the magnetic disk and on the top and bottom surfaces. On the opposite side of the actuator 8 and shaft 12, a coil 9 is fixed. Above the coil 9, at a fixed distance, an upper yoke 10a is mounted on the base. Below the coil, at a fixed distance, a lower yoke 10b is also mounted on the base 6. On the upper yoke 10a and a lower yoke 10b, permanent magnets 11a, llb are mounted on the side of coil. The coil and permanent magnets form the voice coil motor, and the interaction of the magnetic field of the permanent magnets with the current flowing through the coil causes movement of the actuator. The extent of movement of the actuator is determined by the amount of current flowing through coil.

Next referring to Fig. 1, the substrate of magnetic disk 1 is glass, and a magnetic layer (not shown) is deposited on the top and bottom surfaces of the substrate. A first magnetic head 2a is arranged on the top side of the magnetic disk 1 and is supported by a first slider 3a relative to the surface of the disk during disk rotation. During recording of the data on the top surface of the magnetic disk 1, current is provided from the drive circuit (not shown in Fig. 1) to the coil of the first magnetic head 2a. A second head 2b is arranged on the bottom surface of the magnetic disk 1 and is supported by a second slider 3b relative to the disk surface during rotation of the disk. Data is recorded on the bottom surface of the magnetic disk 1 in the same way as the top surface except that current is provided by the aforementioned drive circuit to the coil of the second magnetic head 2b. Both magnetic heads are monolithic heads, incorporated into the sliders.

In Fig. 1, the first magnetic head 2a and the second magnetic head 2b are shifted with respect to one another in a radial direction by a distance d, where d corresponds to an integral number of recording track widths.

A series of measurements is taken as follows to obtain the aforementioned attenuation and crosstalk ratios. Firstly the 4 MHz signal is recorded onto the top surface of the magnetic disk by the first magnetic head. The 4 MHz signal is then reproduced by the first head to give f'^{4M}. In the next step the 1.5 MHz signal is recorded by the second head onto the bottom surface of the magnetic disk. The 4 MHz signal is then reproduced again by the top head to give f'^{4M}. The 1.5 MHz signal is reproduced at the same time by the top head to give f'^{1.5M}. As described previously, the crosstalk ratio is defined as f'^{1.5M}/f'^{4M} and the attenuation ratio by f'^{4M}/f^{4M}.

Now, the values of the aforementioned attenuation and of the crosstalk are compared, for the conventional case of the first magnetic head and the second magnetic head on the same track(d = 0), and for the first magnetic head and the second magnetic head shifted(d = 10). This gives values as listed in the table of FIG. 4.

As is clear from FIG. 4, by shifting the positions of the first and the second magnetic heads by a fixed number of recording tracks, d, as shown in FIG. 1, the attenuation and the crosstalk of the reproduced signals are reduced sharply, from -1.73 dB to -0.29 dB, and from -46.4 dB to -54.6 dB, respectively. The thickness of the magnetic disk, the magnetic characteristic of recording layer of magnetic disk, and the characteristics of magnetic head, are similar to as mentioned before.

Of course, shifting the position of the magnetic gap in the direction of rotation of magnetic disk can also reduce the attenuation and the crosstalk of the reproduced signal as mentioned above. But the most effective way to reduce the attenuation and the crosstalk is by shifting the recording track of the first and the second magnetic heads.

In the above mentioned embodiment, the magnetic head is a monolithic head but it will apparent that the similar effects will be found with a thin film head or a composite head.

Furthermore, reducing the thickness of the substrate, reducing the coercive force (H_{c}) of the magnetic media, and lowering the flying height of the magnetic head can also increase the effect of the invention.

## Claims

1. A magnetic disk apparatus including at least one magnetic disk (1) comprising a rigid substrate composed of an electrically non-conductive material and a magnetic recording layer on both surfaces of the substrate, the apparatus further including:
a first magnetic head (2a) located adjacent to a first surface of the magnetic disk; and
a second magnetic head (2b) located adjacent to a second surface of the magnetic disk; characterized in that:
the first magnetic head (2a) and the second magnetic head (2b) are disposed at locations shifted with respect to one another in a direction radially of the disk by a distance d which is less than the radial width of either of the first and second magnetic heads, wherein d corresponds to an integral number of recording track widths.

2. A magnetic disk apparatus as claimed in claim 1, wherein said material is glass.

3. A magnetic disk apparatus as claimed in claim 1 or claim 2, wherein said material is ceramic.

4. A magnetic disk apparatus as claimed in any preceding claim, wherein said magnetic head is a monolithic head.

5. A magnetic disk apparatus as claimed in any of claims 1 to 3, wherein said magnetic head is a thin film head.

6. A magnetic disk apparatus as claimed in any of claims 1 to 3, wherein said magnetic head is a composite head.

7. A magnetic disk apparatus as claimed in any preceding claim, further including;
a housing; and
an actuator assembly mounted to the housing for moving the first and second magnetic heads relative to the disk surfaces.

8. A magnetic disk apparatus as claimed in any preceding claim, wherein said magnetic disk apparatus is a magnetic hard disk apparatus.

## Patentansprüche

1. Ein Magnetplattengerät mit mindestens einer Magnetplatte (1) enthaltend ein steifes Substrat, das zusammengesetzt ist aus einem elektrisch nichtleitenden Material und einer magnetischen Aufzeichnungsschicht auf beiden Oberflächen des Substrats, wobei das Gerät ferner beinhaltet:
einen ersten Magnetkopf (2a) in der Nähe einer ersten Oberfläche der Magnetplatte; und
einen zweiten Magnetkopf (2b) in der Nähe einer zweiten Oberfläche der Magnetplatte;
dadurch gekennzeichnet, daß
der erste Magnetkopf (2a) und der zweite Magnetkopf (2b) an Stellen angeordnet sind, die relativ zueinander in radialer Richtung der Magnetplatte um einen Abstand d versetzt sind, der kleiner ist als die radiale Breite des ersten oder des zweiten Magnetkopfs, wobei d eine Ganzzahl ist, die den Aufzeichnungsspurbreiten entspricht.

2. Ein Magnetplattengerät gemäß Anspruch 1, worin das Material Glas ist.

3. Ein Magnetplattengerät gemäß Anspruch 1 oder Anspruch 2, worin das Material Keramik ist.

4. Ein Magnetplattengerät gemäß einem der vorstehenden Ansprüche, worin der Magnetkopf ein monolithischer Kopf ist.

5. Ein Magnetplattengerät gemäß einem beliebigen der Ansprüche 1 bis 3, worin der Magnetkopf ein Dünnschichtkopf ist.

6. Ein Magnetplattengerät gemäß einem beliebigen der Ansprüche 1 bis 3, worin der Magnetkopf ein zusammengesetzter Kopf ist.

7. Ein Magnetplattengerät gemäß einem beliebigen der vorstehenden Ansprüche, das ferner beinhaltet:
ein Gehäuse; und
eine Stellglied-Baugruppe, die an dem Gehäuse montiert ist, um den ersten und den zweiten Magnetkopf relativ zu den Plattenoberflächen zu bewegen.

8. Ein Magnetplattengerät gemäß einem beliebigen der vorstehenden Ansprüche, worin das Magnetplattengerät ein magnetisches Festplattengerät ist.

## Revendications

1. Unité du disque magnétique comprenant au moins un disque magnétique (1) comprenant un substrat rigide constitué d'un matériau électriquement non conducteur et d'une couche d'enregistrement magnétique sur les deux surfaces du substrat, l'unité comprenant de plus :
une première tête magnétique (2a) placée adjacente à une première surface du disque magnétique ; et
une seconde tête magnétique (2b) placée adjacente à une seconde surface du disque magnétique ; caractérisée en ce que :
la première tête magnétique (2a) et la seconde tête magnétique (2b) sont disposées à des emplacements décalés l'un de l'autre dans une direction radiale du disque d'une distance d qui est inférieure à la largeur radiale de chacune des première et seconde têtes magnétiques, dans laquelle d correspond à un nombre entier de largeurs de piste d'enregistrement.

2. Unité du disque magnétique selon la revendication 1, dans laquelle ledit matériau est du verre.

3. Unité du disque magnétique selon la revendication 1 ou la revendication 2, dans lequel ledit matériau est de la céramique.

4. Unité du disque magnétique selon l'une quelconque des revendications précédentes, dans laquelle ladite tête magnétique est une tête monolithique.

5. Unité du disque magnétique selon l'une quelconque des revendications 1 à 3, dans laquelle ladite tête magnétique est une tête à couches minces.

6. Unité du disque magnétique selon l'une quelconque des revendications 1 à 3, dans laquelle ladite tête magnétique est une tête composite.

7. Unité du disque magnétique selon l'une quelconque des revendications précédentes, comprenant de plus ;
un logement ; et
un ensemble de bras de lecture/écriture monté sur le logement pour déplacer les première et seconde têtes magnétiques par rapport aux surfaces du disque.

8. Unité du disque magnétique selon l'une quelconque des revendications précédentes, dans laquelle ladite unité de disque magnétique est une unité de disque dur magnétique.
